# FASCICULE DE BREVET EUROPEEN

(11) **EP 3 312 058 B1**
(45) Date de publication et mention de la délivrance du brevet: **14.08.2019**
(21) Numéro de dépôt: 17191947.5
(22) Date de dépôt: 19.09.2017
(51) Int. Cl.: B60R 22/02, B60R 22/12

(54) **DISPOSITIF DE RETENUE D'UNE PARTIE DE SANGLE DE CEINTURE DE SECURITE D'UN VEHICULE AUTOMOBILE**
HALTEVORRICHTUNG FÜR EINEN GURTTEIL DES SICHERHEITSGURTS EINES KRAFTFAHRZEUGS
DEVICE FOR RETAINING A MOTOR VEHICLE SEATBELT STRAP PORTION

(30) Priorité: 20.10.2016 FR 1660166
(43) Date de publication de la demande: 25.04.2018
(73) Titulaire: PSA Automobiles SA, 78300 Poissy (FR)
(72) Inventeur: PETIT, FRANCOIS, 25260 MONTENOIS (FR); CARVAL, FREDERIC, 90000 BELFORT (FR); BOUCHET, LAURENT, 25350 MANDEURE (FR); RICHARD, PAUL, 25000 BESANCON (FR)

(56) Documents cités:
- EP-A1- 1 702 816
- DE-A1-102004 019 821
- DE-A1-102011 112 989
- FR-A1- 2 829 084

## Description

La présente invention concerne un dispositif de retenue, ou de maintien en position de rangement, d'une partie de sangle de ceinture de sécurité d'un véhicule automobile.

L'invention concerne également un véhicule automobile équipé de ceintures de sécurité dont l'une au moins peut être maintenue en position de rangement grâce à un dispositif selon l'invention.

Elle s'adresse plus particulièrement à des sangles de ceintures de sécurité pour sièges de « rang 3 » (troisième rangée de sièges), c'est-à-dire des sièges, généralement au nombre de deux et qui sont rabattables et escamotables dans le plancher de coffre du véhicule en cas de non utilisation.

Le contexte des ceintures de sécurité prévues pour les sièges de « rang 3 » est particulièrement pénalisant en termes de maintien de la sangle de ceinture le long de la garniture latérale du coffre quand les sièges sont rabattus et escamotés dans le plancher de coffre.

Il est connu des systèmes de maintien de sangle de ceinture de sécurité en forme de pinces, appelés « pinces cravates » qui sont fixées sur la garniture latérale du coffre et dans lesquelles l'usager doit insérer la sangle.

Il est d'usage que les passagers des places de « rang 3 » soient des enfants dont la plupart sont peu précautionneux s'agissant du rangement d'une ceinture.

Quand les ceintures ne sont pas rangées elles peuvent créer un bruit parasite au roulage, potentiellement gênant pour le conducteur.

D'autre part, s'agissant d'un adulte, conducteur ou passager du véhicule, il est assez compliqué pour lui , ergonomiquement parlant, de remettre les ceintures en place dans leur position de rangement depuis le coffre.

Les véhicules possédant des sièges de rang 3 comportent généralement un faux plancher qui se présente généralement sous la forme de plusieurs volets ou «flaps » liés en rotation le uns aux autres et qui se déplient suivant la profondeur du coffre et dont au moins un bord vient lécher la garniture latérale du coffre dans la cinématique de recouvrement des sièges et/ou des espaces vides laissés dans le plancher par les sièges une fois ces derniers rabattus et escamotés dans le plancher.

Les bords latéraux des « flaps » sont souvent bloqués dans leur déploiement entre leur position de stockage et leur position de recouvrement et inversement soit parce que la partie basse de la sangle a été mal mise en place dans la pince, laissant pendre une boucle dite résiduelle sur le plancher, soit tout simplement parce la sangle n'a pas été mise en place dans la pince.

Ce qui oblige le conducteur à pousser la ceinture avec la main en même temps que de manipuler les « flaps ».

DE 10 2004 019821 divulgue un dispositif de retenue d'une partie de sangle de ceinture de sécurité d'un véhicule automobile contre une partie de garniture intérieure dudit véhicule, la partie de sangle comportant une pièce en matériau ferromagnétique solidaire de la partie de sangle et la partie de garniture étant en matériau amagnétique et comportant un aimant solidaire de la partie de garniture; l'aimant et la pièce solidaire de la partie de sangle étant agencés en regard l'un de l'autre de manière à ce que la pièce solidaire de la partie de sangle et donc la partie de la sangle soit attirée par l'aimant quand cette dernière passe dans le champ magnétique de l'aimant pour plaquer la dite pièce et donc la partie de sangle contre la partie de garniture.

De tels systèmes engendrent un problème de nature ergonomique et peuvent, d'autre part engendrer un problème de bruit dans le cas où la ceinture se déclippe de la pince.

Les mêmes problèmes existent également quand on doit manipuler des objets dans le coffre.

La présente invention a pour but de pallier les inconvénients décrits ci-dessus.

A cet effet, elle propose un dispositif de retenue d'une partie de sangle de ceinture de sécurité d'un véhicule automobile contre une partie de garniture intérieure dudit véhicule, caractérisé en ce que la partie de sangle comporte une pièce en matériau ferromagnétique solidaire de la partie de sangle et en ce que la partie de garniture est en matériau amagnétique et comporte un aimant solidaire de la partie de garniture ; l'aimant et la pièce solidaire de la partie de sangle étant agencés en regard l'un de l'autre de manière à ce que la pièce solidaire de la partie de sangle et donc la partie de la sangle soit attirée par l'aimant quand cette dernière passe dans le champ magnétique de l'aimant pour plaquer la dite pièce et donc la partie de sangle contre la partie de garniture .

Selon une caractéristique, la partie de garniture comporte un support de l'aimant apte à recevoir l'aimant de manière amovible.

Selon une autre caractéristique, le support vient de matière avec la partie de garniture.

Selon une autre caractéristique, le support est agencé sur la face de la partie de garniture non visible de l'intérieur du véhicule.

Selon une autre caractéristique, la pièce solidaire de la partie de sangle est un rivet.

Selon une autre caractéristique, le rivet est constitué d'un bouton mâle et d'un bouton femelle ; le bouton femelle traversant de part en part la partie de sangle et le bouton mâle étant enfoncé en force dans le bouton pour emprisonner la partie de sangle entre les deux boutons.

Selon une autre caractéristique, les têtes des boutons respectivement mâles et femelles définissent des rondelles cylindriques plates de section circulaire et à bord chanfreiné ; le diamètre de la rondelle du bouton femelle étant plus grand que le diamètre de la rondelle du bouton mâle.

Selon une autre caractéristique, la rondelle du bouton femelle est disposée en regard de la partie de garniture.

Selon une autre caractéristique, la partie de sangle appartient à une sangle de ceinture de sécurité pour siège de « rang 3 ».

Enfin, l'invention a pour autre objet un véhicule automobile comportant un dispositif de retenue tel que décrit ci-dessus.

D'autres particularités et avantages de l'invention apparaîtront à l'examen de la description détaillée ci-après, et des dessins annexés, sur lesquels :
- la figure 1 est une vue en perspective montrant une partie de l'intérieur d'un véhicule automobile comportant un premier élément du dispositif de retenue d'une sangle de ceinture de sécurité de « rang 3 », selon l'invention, dans sa position de retenue ;
- la figure 2 est une vue en perspective montrant un deuxième élément du dispositif de retenue selon l'invention, non visible de l'intérieur du véhicule ;
- les figures 3 et 3a sont des vues de la sangle telle qu'orientée vers l'intérieur de l'habitacle montrant le bouton mâle du premier élément du dispositif de retenue selon l'invention ; et
- les figures 4 et 4a sont des vues de la sangle telle qu'orientée vers la partie de garniture de l'habitacle du véhicule, montrant le bouton femelle du premier élément du dispositif de retenue selon l'invention.

Sur les figures, les éléments identiques sont repérés par les mêmes références numériques.

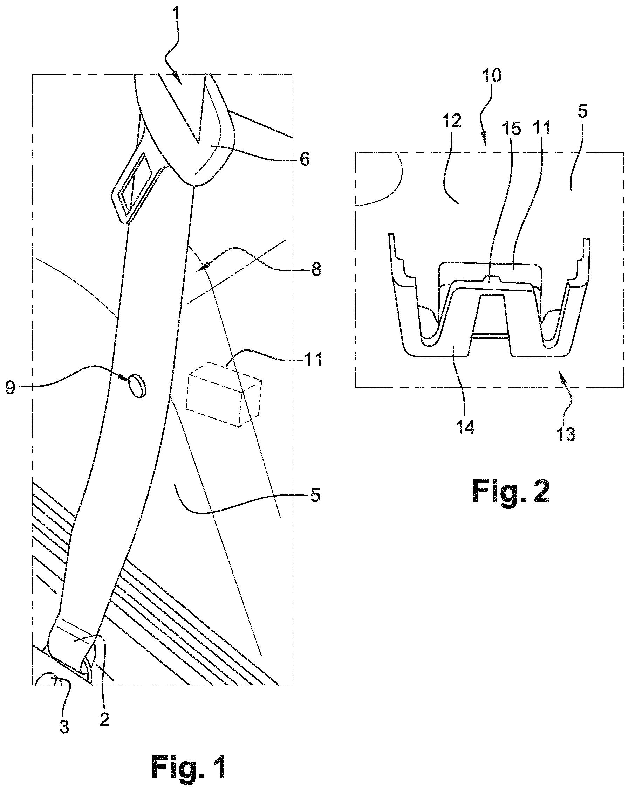

La figure 1 illustre une partie de sangle 1 de ceinture de sécurité destinée à un siège de « rang 3 », non représenté. Une extrémité de la sangle se terminant par une boucle 2, fermée sur elle-même, est fixée sur le plancher du véhicule correspondant au plancher du coffre dans l'exemple considéré (non représenté), par l'intermédiaire d'un point d'ancrage 3 comportant une patte trouée 4 recourbée, recevant la boucle 2 de la sangle 1. Le point d'ancrage 3 et la patte 4 sont disposés au plus près de la partie de garniture intérieure latérale voisine du plancher du coffre 5 de manière à tenir la sangle 1 au plus près de la garniture 5.

L'autre extrémité de la sangle 1, non représentée, est fixée via un dispositif enrouleur de ceinture, à une partie haute de la carrosserie de manière connue.

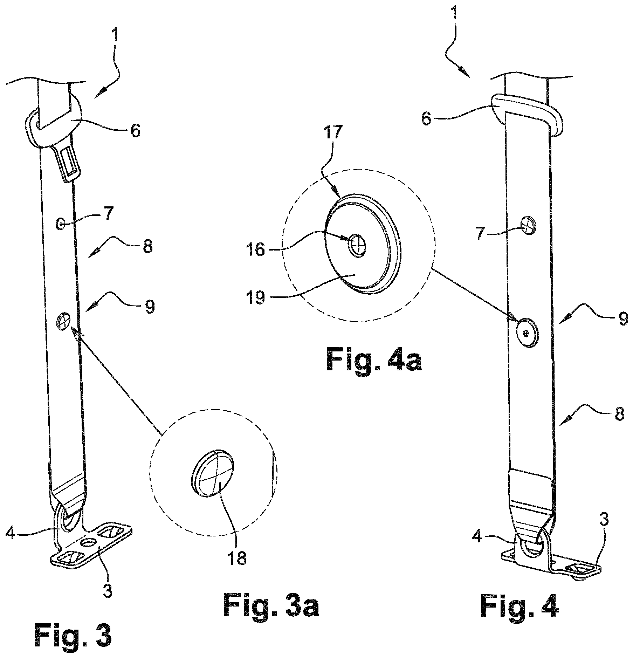

Un passant de boucle 6 est monté coulissant sur la sangle1 et est arrêté sur la sangle 1 par une butée fixe 7 (Fig. 3 et 4) rapportée sur la sangle 1 à une distance déterminée du point d'ancrage 3. Cette butée 7 a la forme d'un bouton en plastique.

La partie de sangle 8 comprise entre la butée 7 et le point d'ancrage 3, comporte un premier élément 9 d'un dispositif de retenue selon l'invention.

Ce premier élément 9 est apte à coopérer avec un second élément 10, non visible de l'intérieur du coffre, solidaire de la partie de garniture 5 et disposé derrière la partie de garniture 5 pour plaquer la partie de sangle 8 contre la partie de garniture 5. A titre de variante, le deuxième élément 10 pourrait être intégré (noyé) dans la garniture 5.

Le premier élément 9 du dispositif de retenue selon l'invention, solidaire de la partie de sangle 8, est une pièce en matériau ferromagnétique.

Le second élément 10 du dispositif de retenue comporte un aimant 11 solidaire de la partie de garniture 8 qui est en matériau amagnétique.

L'aimant 11 et la pièce 9 solidaire de la partie de sangle 8, qui est donc apte à être aimantée par l'aimant 11, sont agencés en regard l'un de l'autre de manière à ce que la pièce 9 solidaire de la partie de sangle 8 et donc la sangle 8, soit attirée par l'aimant 11 quand cette dernière passe dans le champ magnétique de l'aimant 11 pour plaquer la dite pièce 9 et donc la partie de sangle 8 contre la partie de garniture 5.

La partie de garniture 5 comporte sur sa face 12, non visible de l'intérieur du coffre, un support 13 de l'aimant 11, apte à recevoir l'aimant 11 de manière amovible pour pouvoir le monter et le changer le cas échéant.

Dans le mode de réalisation illustré à la figure 2, le support 13 vient de matière avec la partie de garniture 8 qui est réalisée dans un matériau plastique et obtenue par un procédé de moulage plastique bien connu de l'homme du métier de la plasturgie automobile.

Dans le mode de réalisation de la figure 2, l'aimant 11 est de forme générale parallélépipédique, et le support 13 est conformé pour définir un réceptacle ou cage pour l'aimant 11, en forme de W, adossée à la face 12, non visible de la partie de garniture 5, la face 12 définissant une des parois latérales de la cage.

A l'intérieur de la cage 13, l'aimant 11 est maintenu serré entre la paroi définie par la face 12 et une patte 14 élastiquement déformable reliée, faisant face à la parois 12 surmontée d'une languette 15 rabattue vers la parois 12, de manière à fermer la cage 13 et donc bloquer l'aimant 11 à l'intérieur de la cage 13.

La patte élastique permet en l'écartant de la face 12, de monter l'aimant 11 dans le support 13 ou de le remplacer en cas de désaimantation de l'aimant 11.

La pièce en matériau ferromagnétique 9 solidaire de la partie de sangle 8, est un rivet qui est constitué d'un bouton mâle 16 et d'un bouton femelle 17.

Les têtes 18, 19 des boutons respectivement mâles 16 et femelles 17 définissent respectivement des rondelles cylindriques plates de section circulaire et à bord chanfreiné ; le diamètre de la tête 19 du bouton femelle 16 étant plus grand que le diamètre de la tête 18 du bouton mâle 15.

Le bouton femelle 17 traverse la partie de sangle 8 de part en part et le bouton mâle 16 est enfoncé en force dans le bouton femelle 17 pour emprisonner la partie de sangle 8 entre les deux têtes 18 et 19 de boutons 16 et 17.

La tête 19 du bouton femelle 17 est disposée de manière à être en regard de l'aimant 11 solidaire de la partie de garniture 5.

Ainsi, avec un dispositif de retenue selon l'invention, la partie de sangle reste toujours tendue et plaquée automatiquement contre la partie de garniture voisine du plancher de coffre dès lors que la ceinture est en position de non utilisation, siège rabattu et/ou escamoté dans le plancher du coffre.

La sangle ainsi retenue tendue, n'entrave pas la cinématique du faux-plancher ou « flaps », ni celle du rabattement/redressement du siège ni encore, les manipulations d'objets dans le coffre.

## Revendications

1. Dispositif de retenue comprenant une partie de sangle (8) et une partie de garniture intérieure latérale (5) du véhicule, ledit dispositif étant agencé de manière à maintenir la partie de sangle (8) de ceinture de sécurité d'un véhicule automobile contre la partie de garniture intérieure latérale (5) dudit véhicule, la partie de sangle (8) comportant une pièce (9) en matériau ferromagnétique solidaire de la partie de sangle (8), la partie de garniture intérieure latérale (5) étant en matériau amagnétique et comportant un aimant (11) solidaire de la partie de garniture intérieure latérale (5) ; l'aimant (11) et la pièce (9) solidaire de la partie de sangle (8) étant agencés en regard l'un de l'autre de manière à ce que la pièce (9) solidaire de la partie de sangle (8) et donc la partie de la sangle (8) soit attirée par l'aimant (11) quand cette dernière passe dans le champ magnétique de l'aimant (11) pour plaquer la dite pièce (9) et donc la partie de sangle (8) contre la partie de garniture intérieure latérale (5), la partie de garniture intérieur latérale (5) comportant un support (10) de l'aimant (11) apte à recevoir l'aimant (11) de manière amovible, et le support (10) étant agencé sur la face (12) de la partie de garniture l'intérieure latérale (5) non visible de l'intérieur du véhicule.

2. Dispositif de retenue selon la revendication précédente, **caractérisé en ce que** le support (10) vient de matière avec la partie de garniture (5).

3. Dispositif de retenue selon l'une des revendications précédentes, **caractérisé en ce que** la pièce (9) solidaire de la partie de sangle (8) est un rivet.

4. Dispositif de retenue selon la revendication précédente, **caractérisé en ce que** le rivet (9) est constitué d'un bouton mâle (16) et d'un bouton femelle (17) ; le bouton femelle (17) traversant de part en part la partie de sangle (8) et le bouton mâle (16) étant enfoncé en force dans le bouton femelle (17) pour emprisonner la partie de sangle (8) entre les deux boutons (16 et 17).

5. Dispositif de retenue selon la revendication précédente **caractérisé en ce que** les têtes (18, 19) des boutons respectivement mâles et femelles (16, 17) définissent des rondelles cylindriques plates de section circulaire et à bord chanfreiné ; le diamètre de la rondelle (19) du bouton femelle (17) étant plus grand que le diamètre de la rondelle (18) du bouton mâle (16).

6. Dispositif de retenue selon la revendication précédente, **caractérisé en ce que** la rondelle (19) du bouton femelle (17) est disposée en regard de la partie de garniture (5).

7. Dispositif de retenue selon l'une des revendications précédentes, **caractérisé en ce que** la partie de sangle (8) appartient à une sangle (1) de ceinture de sécurité pour siège de « rang 3 ».

8. Véhicule automobile comportant un dispositif de retenue selon l'une des revendications précédentes.

## Patentansprüche

1. Haltevorrichtung, die einen Gurtteil (8) und einen seitlichen Innenverkleidungsteil (5) des Fahrzeugs umfasst, wobei die Vorrichtung derart eingerichtet ist, dass sie den Gurtteil (8) des Sicherheitsgurts gegen den seitlichen Innenverkleidungsteil (5) des Fahrzeugs hält, wobei der Gurtteil (8) ein Teil (9) aus ferromagnetischem Material umfasst, das fest mit dem Gurtteil (8) verbunden ist, wobei der seitliche Innenverkleidungsteil aus unmagnetischem Material besteht und einen Magnet (11) umfasst, der fest mit dem seitlichen Innenverkleidungsteil (5) verbunden ist; wobei der Magnet (11) und das Teil (9), das fest mit dem Gurtteil (8) verbunden ist, einander gegenüber derart eingerichtet sind, dass das Teil (9), das fest mit dem Gurtteil (8) verbunden ist und daher der Gurtteil (8) von dem Magnet (11) angezogen werden, wenn dieser Letztere in dem Magnetfeld des Magnets (11) durchgeht, um das Teil (9) und daher den Gurtteil (8) gegen den Teil seitlicher Innenverkleidung (5) anzudrücken, wobei der seitliche Innenverkleidungsteil (5) einen Träger (10) des Magnets (11) umfasst, der geeignet ist, um den Magnet (11) abnehmbar aufzunehmen, und wobei der Träger (10) auf der Fläche (12) des seitlichen Innenverkleidungsteils (5) von außerhalb des Fahrzeugs nicht sichtbar ist.

2. Haltevorrichtung nach dem vorstehenden Anspruch, **dadurch gekennzeichnet, dass** der Träger (10) aus einem Stück mit der Verkleidung (5) besteht.

3. Haltevorrichtung nach einem der vorstehenden Ansprüche, **dadurch gekennzeichnet, dass** das Teil (9), das fest mit dem Gurtteil (8) verbunden ist, eine Niete ist.

4. Haltevorrichtung nach dem vorstehenden Anspruch, **dadurch gekennzeichnet, dass** die Niete (9) aus einem Steckknopf (16) und einem Hülsenknopf (17) besteht; wobei der Hülsenknopf (17) den Gurtteil (8) ganz durchquert, und der Steckknopf (16) unter Kraftanwendung in den Hülsenknopf (17) eingedrückt ist, um den Gurtteil (8) zwischen den zwei Knöpfen (16 und 17) gefangen zu halten.

5. Haltevorrichtung nach dem vorstehenden Anspruch, **dadurch gekennzeichnet, dass** die Köpfe (18, 19) jeweils des Steckknopfs und des Hülsenknopfs (16, 17) flache zylindrische Scheiben mit Kreisquerschnitt und abgefastem Rand definieren; wobei der Durchmesser der Scheibe (19) des Hülsenknopfs (17) größer ist als der Durchmesser der Scheibe (18) des Steckknopfs (16).

6. Haltevorrichtung nach dem vorstehenden Anspruch, **dadurch gekennzeichnet, dass** die Scheibe (19) des Hülsenknopfs (17) gegenüber dem Verkleidungsteil (5) angeordnet ist.

7. Haltevorrichtung nach einem der vorstehenden Ansprüche, **dadurch gekennzeichnet, dass** der Gurtteil (8) zu einem Sicherheitsgurt (1) für Sitz "Rang 3" gehört.

8. Kraftfahrzeug, das eine Haltevorrichtung nach einem der vorstehenden Ansprüche umfasst.

## Claims

1. A retaining device including a strap portion (8) and a lateral interior trim part (5) of the vehicle, said device being arranged so as to hold the seatbelt strap portion (8) of a motor vehicle against the lateral interior trim part (5) of said vehicle, the strap portion (8) comprising a piece (9) of ferromagnetic material integral with the strap portion (8), the lateral interior trim part (5) being made of nonmagnetic material and comprising a magnet (11) integral with the lateral interior trim part (5); the magnet (11) and the piece (9) integral with the strap portion (8) being arranged facing one another so that the piece (9) integral with the strap portion (8), and therefore the portion of the strap (8), is attracted by the magnet (11) when the latter passes in the magnetic field of the magnet (11) to press said piece (9), and therefore the strap portion (8), against the lateral interior trim part (5), the lateral interior trim part (5) comprising a support (10) of the magnet (11) suited to receive the magnet (11) in a detachable manner, and the support (10) being arranged on the face (12) of the lateral interior trim part (5) which is not visible from the interior of the vehicle.

2. The retaining device according to the preceding claim, **characterized in that** the support (10) is made in one piece with the trim part (5).

3. The retaining device according to one of the preceding claims, **characterized in that** the piece (9) which is integral with the strap portion (8) is a rivet.

4. The retaining device according to the preceding claim, **characterized in that** the rivet (9) is constituted by a male button (16) and a female button (17); the female button (17) crossing the strap portion (8) and the male button (16) being pushed with force into the female button (17) to trap the strap portion (8) between the two buttons (16 and 17).

5. The retaining device according to the preceding claim, **characterized in that** the heads (18, 19) of the respectively male and female buttons (16, 17) define flat cylindrical washers of circular section and with a chamfered edge; the diameter of the washer (19) of the female button (17) being greater than the diameter of the washer (18) of the male button (16).

6. The retaining device according to the preceding claim, **characterized in that** the washer (19) of the female button (17) is arranged facing the trim part (5).

7. The retaining device according to one of the preceding claims, **characterized in that** the strap portion (8) belongs to a safety belt strap (1) for a "third-row" seat.

8. A motor vehicle comprising a retaining device according to one of the preceding claims.
